# EUROPÄISCHE PATENTSCHRIFT

(11) **EP 4 467 040 B1**
(45) Veröffentlichungstag und Bekanntmachung des Hinweises auf die Patenterteilung: **03.06.2026**
(21) Anmeldenummer: 23175358.3
(22) Anmeldetag: 25.05.2023
(51) Int. Cl.: A47J 36/32

(54) **KÜCHENGERÄT, VERBINDUNGSELEMENT UND VERFAHREN ZUR ÜBERTRAGUNG EINES INFORMATIONSSIGNALS**
KITCHEN APPLIANCE, CONNECTING ELEMENT AND METHOD FOR TRANSMITTING AN INFORMATION SIGNAL
APPAREIL DE CUISINE, ÉLÉMENT DE CONNEXION ET PROCÉDÉ DE TRANSMISSION D'UN SIGNAL D'INFORMATIONS

(43) Veröffentlichungstag der Anmeldung: 27.11.2024
(73) Patentinhaber: Vorwerk & Co. Interholding GmbH, 42275 Wuppertal (DE)
(72) Erfinder: Beckmann, Nils, 42853 Remscheid (DE); Lang, Torsten, 42657 Solingen (DE); Wahle, Volker, 46499 Hamminkeln (DE); Bletek, Thomas, 52391 Vettweiß (DE)
(74) Vertreter: Cohausz & Florack

(56) Entgegenhaltungen:
- EP-A1- 3 056 882
- EP-A1- 3 841 926
- WO-A1-2021/038528

## Beschreibung

Die vorliegende Erfindung betrifft ein Küchengerät mit einem Grundgerät, wobei das Grundgerät ein erstes, zur kabellosen Kommunikation eingerichtetes Kommunikationsmodul aufweist, mit einem Aufnahmegefäß, wobei das Aufnahmegefäß eine Wandung mit einer durchdringenden Öffnung aufweist und mit einem Zubehörteil, wobei das Zubehörteil ein zweites, zur kabellosen Kommunikation eingerichtetes Kommunikationsmodul aufweist. Die Erfindung betrifft auch ein Verbindungselement für ein Küchengerät mit einem Grundkörper, wobei der Grundkörper zumindest teilweise zur Anordnung in einer durchdringenden Öffnung in der Wandung eines Aufnahmegefäßes des Küchengeräts ausgebildet ist. Auch beschrieben wird ein Verfahren zur Übertragung eines Informationssignals.

Elektrisch betriebene Küchengeräte sind bereits bekannt, insbesondere zum Verarbeiten von rohen oder halbfertigen Lebensmittelprodukten. Oft weisen solche Küchengeräte ein Grundgerät auf, mit dem separate Funktionsteile zusammenwirken, um je nach erzieltem Gericht, Getränk oder ähnliches ein Lebensmittel zu verarbeiten. Diese Funktionsteile werden in der Regel durch Küchengerätanbieter als Zubehörteile verkauft, zum Beispiel als Deckel, Messer- oder Rühreinheit.

Um die Herstellungskosten dieser Zubehörteile gering zu halten und somit auch die Rentabilität des Zubehörgeschäfts zu steigern, soll das Grundgerät vielseitig einsetzbar sein und möglichst viele der kostenintensiveren Komponenten aufweisen, wie zum Beispiel den Elektromotor für den Antrieb der beweglichen Teile der Zubehörteile oder eine Steuereinrichtung. Eine derartige Gestaltung ermöglicht allerdings Wettbewerber, mit dem kostenintensiven Grundgerät kompatible, in der Herstellung günstige Zubehörteile anzubieten. Zu dieser Problematik wurde bereits vorgeschlagen, ein NFC-Transponder (Near Field Communication Transponder) am Zubehörteil und ein entsprechendes Lesemodul am Grundgerät anzubringen, um das Zubehörteil dann als "zulässig" oder eben nicht zu erkennen. Diese Lösung wird in der Druckschrift EP 3 841 926 A1 ausführlich erläutert.

Weiter problematisch bleibt allerdings, dass die Zubehörteile häufig in dem Aufnahmeraum eines Aufnahmegefäßes des Küchengeräts eingesetzt werden, wobei das Aufnahmegefäß, das in der Regel zum Aufnehmen von warmen Lebensmitteln, aus einem für elektromagnetischen Wellen zumindest teilweise undurchlässigem Material wie Metall ausgebildet ist. Somit wird ein NFC-Transponder eines Zubehörteils, das an einer Seite der Wandung des Aufnahmegefäßes angeordnet ist, vom Anregungssignal eines NFC-Lesemoduls, das an der anderen Seite der Wandung des Aufnahmegefäßes angeordnet ist, überwiegend abgeschirmt, was ein Erkennen des Zubehörteils hindert. Die Druckschrift EP 3 841 926 A1 schlägt vor, das Anregungssignal des Lesemoduls über ein Wiederholungsmodul in einem Deckel des Küchengeräts umzuleiten, um so die Wandung des Aufnahmegefäßes umzugehen. Für diese Lösung muss allerdings der Deckel entsprechend angeordnet sein.

Ferner offenbart die WO 2021/038528 A1 einen Grill mit einem geschlossenen Garraum und einem in der Wandung des Grills angeordneten und durchdringenden Repeater.

Vor diesem Hintergrund liegt der vorliegenden Erfindung die Aufgabe zu Grunde, zuvor bekannte Küchengeräte zu verbessern, insbesondere die Nutzerfreundlichkeit beim Einsetzen von Zubehörteilen zu steigern.

Diese Aufgabe wird erfindungsgemäß durch ein Küchengerät mit einem Grundgerät, wobei das Grundgerät ein erstes, zur kabellosen Kommunikation eingerichtetes Kommunikationsmodul aufweist, mit einem Aufnahmegefäß, wobei das Aufnahmegefäß eine Wandung mit einer durchdringenden Öffnung aufweist und mit einem Zubehörteil, wobei das Zubehörteil ein zweites, zur kabellosen Kommunikation eingerichtetes Kommunikationsmodul aufweist, dadurch gelöst, dass ein Verbindungselement vorgesehen ist, wobei das Verbindungselement zur Anordnung in der durchdringenden Öffnung der Wandung des Aufnahmegefäßes ausgebildet ist, und wobei das Verbindungselement zum Übermitteln von Signalen zwischen dem ersten Kommunikationsmodul und dem zweiten Kommunikationsmodul eingerichtet ist.

Dadurch lässt sich ein Zubehörteil einfach und zuversichtlich erkennen, ohne dass ein Deckel am Aufnahmegefäß angeordnet ist oder der Griff mit elektronischen Elementen ausgestattet werden muss. Außerdem kann ein Aufnahmegefäß, das ohnehin eine durchdringende Öffnung in der Wandung aufweist, um zum Beispiel ein Zubehörteil mit dem Antrieb des Grundgeräts zu ermöglichen, weiter verwendet werden. Insgesamt können durch die Erfindung existierende Küchengeräte einfach umgerüstet und gleichzeitig die Nutzerfreundlichkeit gesteigert werden.

Ein Grundgerät im Sinne der vorliegenden Erfindung ist vorzugsweise als Basis für den Einsatz von einem Aufnahmegefäß und Zubehörteilen ausgestaltet. Das Grundgerät weist ein Gehäuse auf, in dem ein Elektromotor zum Antrieb von Zubehörteilen angeordnet ist.

Das Aufnahmegefäß weist eine Wandung auf, die einen Aufnahmeraum zur Aufnahme von Lebensmitteln zumindest teilweise umgibt. Vorzugsweise umfasst die Wandung einen Boden und Wände, die einstückig oder eben mehrstückig, als separate Teile ausgebildet sind. An der Wandung kann zum Beispiel ein Griff oder einen Doppelboden angebracht sein. Insbesondere kann eine Heizung am Boden vorgesehen sein. Ferner kann der Griff oder der Doppelboden aus einem thermisch isolierenden Material ausgebildet sein, um Verbrennungsgefahren bei einem Nutzer oder einer Küchenarbeitsfläche zu verringern. Des Weiteren kann die Wandung bzw. der Boden des Aufnahmegefäßes oder der Doppelboden derart ausgebildet sein, dass er eine Schnittstelle zur mechanischen Verbindung mit dem Gehäuse des Grundgeräts bildet.

Die Wandung des Aufnahmegefäßes weist eine durchdringende Öffnung auf. Vorzugsweise ist die durchdringende Öffnung in dem Boden ausgebildet, insbesondere wenn das Aufnahmegefäß zur Verbindung mit dem Grundgerät im Bodenbereich bestimmt ist. Alternativ kann die durchdringende Öffnung an einer Wand der Wandung vorgesehen sein. In diesem Fall sind die Erfordernisse an Dichtheit gegenüber in dem Aufnahmeraum des Aufnahmegefäßes aufgenommenen Lebensmitteln geringer, und so auch die Herstellung des Küchengeräts einfacher.

Als Zubehörteil wird jedes für ein Zusammenwirken mit dem Grundgerät ausgebildetes Teil verstanden. Der Begriff "Zusammenwirken" umfasst, unter anderem, die Handlungen aus der Liste: Verbinden, Koppeln, Montieren, Aufsetzen, Anbringen, Aufbringen und Ähnliches. Insbesondere ist ein Zubehörteil zur Erweiterung der Funktion des Grundgeräts ausgebildet, zum Beispiel als Schneide-, Rühr-, Koch-, Wiege-, Gar-, Dampf- oder Abdeckungseinheit.

Das Grundgerät und das Zubehörteil weisen jeweils ein zur kabellosen Kommunikation eingerichtetes Kommunikationsmodul auf. Dabei sind das erste Kommunikationsmodul des Grundgeräts und das zweite Kommunikationsmodul des Zubehörteils vorzugsweise dazu eingerichtet, kabellos miteinander Signale auszutauschen. Insbesondere ist das erste Kommunikationsmodul dazu eingerichtet, ein Anregungssignal, beispielsweise ein hochfrequentes elektromagnetisches Wechselfeld, zu emittieren, und ein moduliertes Antwortsignals zu empfangen und auszuwerten. Das zweite Kommunikationsmodul ist vorzugsweise dazu eingerichtet, ein Anregungssignal des ersten Kommunikationsmoduls zu modulieren und als moduliertes Antwortsignals auszugeben.

Ein Verbindungselement im Sinne der vorliegenden Erfindung ist ein Element, das zur Gewährleisten einer Kommunikationsverbindung zwischen dem Zubehörteil und dem Grundgerät geeignet ist. Es ist vorgesehen, dass das Verbindungselement zur Anordnung in der durchdringenden Öffnung der Wandung des Aufnahmegefäßes ausgebildet ist. Auf diese Weise kann das Verbindungselement ein Signal, insbesondere in Form einer elektromagnetischen Welle, das vom ersten Kommunikationsmodul des Grundgeräts an einer Seite der Wandung emittiert worden ist, durch die Wandung übertragen und an das zweite Kommunikationsmodul des Zubehörteils weiterleiten. Dies gilt ebenso in die umgekehrte Richtung, also für ein Signal, das von dem zweiten Kommunikationsmodul des Zubehörteils in Richtung des ersten Kommunikationsmoduls des Grundgeräts übertragen wird.

Zur Anordnung in der durchdringenden Öffnung der Wandung des Aufnahmegefäßes weist das Verbindungselement vorzugsweise einen Grundkörper mit einer Formgebung auf, die zumindest abschnittsweise an die Formgebung der durchdringenden Öffnung angepasst ist. Ein Dichtungselement kann zwischen dem Grundkörper des Verbindungselements und der Innenwand der Öffnung vorgesehen sein. Alternativ oder zusätzlich kann das Verbindungselement eine Kappe aufweisen, die in einem montierten Zustand des Verbindungselements in der durchdringenden Öffnung der Wandung des Aufnahmegefäßes zur Abdichtung der Öffnung beiträgt. Vorzugsweise ist die Kappe aus einem Material ausgebildet, das gegenüber mechanischen Beanspruchungen, die bei einer Lebensmittelzubereitung in dem Aufnahmegefäß auftreten, widerständig ist, und das für elektromagnetische Wellen zumindest teilweise durchlässig ist. Beispiele für derartige Materialien sind Polymermaterialien, Silikon, Keramik oder eine Kombination hiervon.

Bei einer ersten Ausführungsform des Küchengeräts ist die Wandung des Aufnahmegefäßes zumindest teilweise aus einem Material ausgebildet, das für elektromagnetische Wellen zumindest teilweise undurchlässig ist.

Die Durchlässigkeit eines Materials gegenüber elektromagnetischen Wellen oder Feldern ist abhängig von der Leitfähigkeit und Permeabilität des Materials sowie von der Frequenz der Wellen oder des Feldes. Für elektromagnetische Wellen oder Felder, die durch einen Nahfeldkommunikations-Transceiver emittiert werden, ist Edelstahl im Wesentlichen undurchlässig bzw. dämpft diese Wellen überwiegend ab. Im Rahmen der vorliegenden Erfindung hat sich Edelstahl für elektromagnetische Wellen mit einer Frequenz von etwa 13,56 MHz als im Wesentlichen undurchlässig erwiesen. Dabei wurde die im Wesentlichen Undurchlässigkeit des Materials an Bereichen der Wandung des Aufnahmegefäßes getestet, die keine durchdringende Öffnung aufweisen. Vorzugsweise eignet sich zusätzlich das Material, um Lebensmittel hygienisch aufzunehmen, insbesondere bei erhöhten Temperaturen, die bei einer Lebensmittelzubereitung regelmäßig vorkommen.

Bei einer weiteren Ausführungsform des Küchengeräts weist das Verbindungselement ein erstes Kommunikationselement und ein zweites Kommunikationselement auf, wobei das erste Kommunikationselement zur drahtlosen Kommunikation mit dem ersten Kommunikationsmodul des Grundgeräts und das zweite Kommunikationselement zur drahtlosen Kommunikation mit dem zweiten Kommunikationsmodul des Zubehörteils eingerichtet sind, und wobei das erste Kommunikationselement und das zweite Kommunikationselement über eine Kabelverbindung verbunden sind.

Dadurch kann, je nach Dimensionen der Kabelverbindung, die Größe der durchdringenden Öffnung in der Wandung des Aufnahmegefäßes gering gehalten werden, um eine höhere Dichtheit des Aufnahmegefäßes zu gewährleisten. Außerdem können auf diese Art das erste Kommunikationselement und das zweite Kommunikationselement einfach und kostengünstig ausgebildet werden, wobei ein Signal zuverlässig von dem einen zu dem anderen übertragen werden kann.

Bei einer weiteren Ausführungsform des Küchengeräts ist das erste Kommunikationsmodul des Grundgeräts ein Nahfeldkommunikationslesemodul, insbesondere ein RFID (Radio-Frequency Identification) Lesemodul oder ein NFC (Near Field Communication) Lesemodul, das zweite Kommunikationsmodul des Zubehörteils ist ein Nahfeldkommunikationstransponder, insbesondere ein RFID-Transponder oder ein NFC-Transponder und das erste Kommunikationselement, das zweite Kommunikationselement und deren Verbindung bilden ein passives Nahfeldwiederholungsmodul, insbesondere ein RFID-Wiederholungsmodul oder ein NFC-Wiederholungsmodul.

Sogenannte RFID-Transceivers, -Transponders und Repeaters sind auf dem Markt frei verfügbar, einfach kostengünstig in der Herstellung und robust in der Anwendung. Entsprechende NFC Module sind ebenso verfügbar. Außerdem bieten sie eine Signalübertragungsreichweite, die für Küchengräte der vorliegenden Art geeignet ist. Hier kann der RFID oder NFC Transponder kann passiv oder aktiv gestaltet sein.

Im Rahmen der vorliegenden Erfindung wird unter "Nahfeldkommunikation" (abgekürzt NFC) ein auf der radio-frequency identification (deutsch "Identifizierung mit Hilfe elektromagnetischer Wellen", abgekürzt "RFID") -Technik basierender internationaler Übertragungsstandard zum kontaktlosen Austausch von Daten per elektromagnetischer Induktion mittels loser gekoppelter Spulen über kurze Strecken von wenigen Zentimetern und einer Datenübertragungsrate von maximal 424 kBit/s verstanden. Dabei werden Daten ausgetauscht, indem das zweite Kommunikationsmodul ein durch das erste Kommunikationsmodul erzeugtes elektromagnetisches Feld moduliert, wobei diese Modulation wiederrum durch das erste Kommunikationsmodul erfassbar ist.

Bei einer weiteren Ausführungsform des Küchengeräts weist das Verbindungselement einen Grundkörper mit einem ersten distalen Abschnitt, mit einem Übergangsabschnitt und mit einem zweiten distalen Abschnitt auf, wobei der erste distale Abschnitt und der zweite distale Abschnitt entgegen gerichtet angeordnet sind und der Übergangsabschnitt den ersten distalen Abschnitt und den zweiten distalen Abschnitt verbindet, wobei der Übergangsabschnitt zur Anordnung in der durchdringenden Öffnung in der Wandung des Aufnahmegefäßes ausgebildet ist. Außerdem sind das erste Kommunikationselement am ersten distalen Abschnitt und das zweite Kommunikationselement am zweiten distalen Abschnitt angeordnet.

Auf diese Art können das erste Kommunikationselement und das zweite Kommunikationselement jeweils an einer Seite der Wandung des Aufnahmegefäßes angeordnet sein. Somit kann insbesondere das Hindernis, das ein Aufnahmegefäß aus einem abschirmenden Material bildet, für einen Signalaustausch überwunden werden. Insbesondere können dann Signale zwischen dem ersten Kommunikationsmodul des Grundgeräts und dem zweiten Kommunikationsmodul des Zubehörteils übertragen werden, ohne dass die Signale um die Wandung des Aufnahmegefäßes, zum Beispiel über den Griff oder den Deckel, umgeleitet werden.

Das Adjektiv "distal" ist vorzugsweise als "von der Grundkörpermitte entfernt" zu verstehen. Der Übergangsabschnitt bildet einen Übergang zwischen dem ersten distalen Abschnitt und dem zweiten distalen Abschnitt. Außerdem können der erste distale Abschnitt, der Übergangsabschnitt und der zweite distale Abschnitt einstückig ausgebildet sein, zum Beispiel in Form einer Welle oder eines Übertragungselements mit einem Kraftübertragungsprofil, insbesondere mit einem Schraubenmitnahmeprofil. Dadurch kann die Verbindung zwischen dem ersten Kommunikationselement und dem zweiten Kommunikationselement einfacher gestaltet werden.

Bei einer weiteren Ausführungsform des Küchengeräts weist der Übergangsabschnitt eine Kabelführung auf und die Kabelführung führt die Kabelverbindung zwischen dem ersten Kommunikationselement und dem zweiten Kommunikationselement.

Die Kabelführung kann ein Kanal, beispielsweise eine Bohrung sein, das den Übergangsabschnitt vom ersten distalen Abschnitt bis zum zweiten distalen Abschnitt des Grundkörpers des Verbindungselements durchquert. Diese Ausbildung der Kabelführung ermöglicht eine abgedichtete, von ihrer Umgebung elektrisch isolierte und somit zuverlässige und langlebige Verbindung der beiden Kommunikationselemente des Verbindungselements.

Alternativ oder zusätzlich kann die Kabelführung eine Aussparung in einer Außenfläche eines Bauteils des Verbindungselements sein, die zur Aufnahme der Kabelverbindung vorgesehen ist. Vorzugsweise erstreckt sich die Aussparung von der Position des ersten Kommunikationselements zur Position des zweiten Kommunikationselements. Ferner kann die Aussparung, die in der Kabelverbindung aufgenommen ist, mit einem Isolierungsmaterial befüllt werden. Das Isolierungsmaterial dichtet somit die Aussparung mit der Kabelverbindung ab bzw. isoliert die Kabelverbindung elektrisch gegenüber der Umgebung.

Bei einer weiteren Ausführungsform des Küchengeräts weist die Kabelverbindung einen Koaxialleiter auf. Dabei weist das Verbindungselement bzw. der Grundkörper des Verbindungselements zumindest teilweise ein elektrisch leitendes Material auf und der Koaxialleiter ist zumindest teilweise durch das elektrisch leitende Material des Grundkörpers des Verbindungselements ausgebildet.

Auf diese Art kann das Verbindungselement kompakter ausgebildet sein, insbesondere auf eine separate Leitung verzichtet werden.

Erfindungsgemäβ weist das Grundgerät einen Antrieb auf und das Verbindungselement bzw. der Grundkörper des Verbindungselements ist zur Übertragung einer Antriebskraft vom Antrieb des Grundgeräts auf das Zubehörteil ausgebildet.

Dadurch kann ein Verbindungselement, das ohnehin bei einem gattungsgemäßen Küchengerät zum Antreiben des Zubehörteils vorgesehen ist, einfach ausgetauscht oder nachgerüstet werden, um das Grundgerät sowohl mechanisch als auch signaltechnisch mit dem Zubehörteil zu verbinden. Dabei ist besonders vorteilhaft, dass das Grundgerät, das Zubehörteil und das Aufnahmegefäß von bereits auf dem Markt verfügbaren Küchengeräten unverändert weiter verwendet werden können, und lediglich das Verbindungselement ausgetauscht werden.

Ein Verbindungselement gemäß dieser Ausführungsform des Küchengeräts kann zum Beispiel einen ersten distalen Abschnitt in Form eines Übertragungselements mit einem Schraubenmitnahmeprofil zur Verbindung mit dem Antrieb des Grundgeräts, einen zweiten distalen Abschnitt in Form eines Schnittstellelements für eine mechanische Verbindung mit einem Zubehörteil und einen Übergangsabschnitt in Form einer Welle, die eine Messereinheit mitführt, aufweisen. Dabei können das erste Kommunikationselement eine Spule am Schnittstellelement und das zweite Kommunikationselement eine Spule am Übertragungselement sein.

Die oben genannte Aufgabe wird erfindungsgemäß auch durch ein Verbindungselement für ein Küchengerät mit einem Grundkörper, wobei der Grundkörper zumindest teilweise zur Anordnung in einer durchdringenden Öffnung in der Wandung eines Aufnahmegefäßes des Küchengeräts ausgebildet ist, dadurch gelöst, dass ein erstes, zur kabellosen Kommunikation eingerichtetes Kommunikationselement und ein zweites, zur kabellosen Kommunikation eingerichtetes Kommunikationselement vorgesehen sind, und dass das erste Kommunikationselement und das zweite Kommunikationselement über eine Kabelverbindung verbunden sind.

Derartige Verbindungselemente eignen sich dazu, Küchengeräte mit einem Erkennungssystem für Zubehörteile einfacher zu gestalten. Insbesondere können die restlichen Teile eines Küchengeräts, wie zum Beispiel das Aufnahmegefäß im Vergleich zu bereits verfügbaren Küchengeräten unverändert übernommen werden. Auch bestehende Küchengeräte können mit dem Verbindungselement einfach nach- oder umgerüstet werden.

Darüber hinaus bietet das Verbindungselement und dessen Ausführungsformen aus den nachfolgenden Absätzen bieten dieselben Vorteile, wie das Küchensystem und die entsprechenden Ausführungsformen des Küchensystems.

Bei einer ersten Ausführungsform des Verbindungsteils bilden das erste Kommunikationselement, das zweite Kommunikationselement und deren Verbindung ein passives Nahfeldwiederholungsmodul insbesondere ein RFID Wiederholungsmodul oder ein NFC Wiederholungsmodul.

Somit lassen sich robuste und einfach verfügbare Module einbauen bzw. das Verbindungselement kann einfach und kostengünstig hergestellt werden.

Bei einer weiteren Ausführungsform des Verbindungsteils weist das der Grundkörper einen ersten distalen Abschnitt, einen Übergangsabschnitt und einen zweiten distalen Abschnitt auf, wobei der erste distale Abschnitt und der zweite distale Abschnitt entgegen gerichtet angeordnet sind und der Übergangsabschnitt den ersten distalen Abschnitt und den zweiten distalen Abschnitt verbindet, und wobei der Übergangsabschnitt zur Anordnung in der durchdringenden Öffnung in der Wandung eines Aufnahmegefäßes des Küchengeräts ausgebildet ist. Ferner ist das erste Kommunikationselement am ersten distalen Abschnitt angeordnet und das zweite Kommunikationselement ist am zweiten distalen Abschnitt angeordnet.

Bei einer weiteren Ausführungsform des Verbindungsteils weist der Übergangsabschnitt eine Kabelführung auf und die Kabelführung führt die Kabelverbindung zwischen dem ersten Kommunikationselement und dem zweiten Kommunikationselement.

Bei einer weiteren Ausführungsform des Verbindungsteils weist die Kabelverbindung einen Koaxialleiter auf, der Grundkörper weist zumindest teilweise ein elektrisch leitendes Material auf und der Koaxialleiter ist zumindest teilweise durch das elektrisch leitende Material des Grundkörpers des Verbindungselements ausgebildet. Insbesondere kann der Grundkörper eine Welle aufweisen, die zur Übertragung einer Antriebskraft und mit einer ein Metall aufweisenden Zusammensetzung ausgebildet ist.

Erfindungsgemäβ weist der Grundkörper ein Übertragungselement zur Übertragung einer Antriebskraft vom ersten distalen Abschnitt zum zweiten distalen Abschnitt auf.

Bei einer weiteren Ausführungsform des Verbindungsteils weist das Verbindungselement eine Messereinheit auf und das Übertragungselement ist zur Übertragung einer Antriebskraft vom Antrieb des Grundgeräts auf die Messereinheit ausgebildet.

Auf diese Art können sowohl die Messereinheit als auch ein Zubehörteil, das mit dem Verbindungselement mechanisch kompatible ausgebildet ist, durch den Antrieb des Grundgerätes angetrieben bzw. in Bewegung gesetzt werden.

Des Weiteren wird die oben genannte Aufgabe auch durch ein Verfahren zur Übertragung eines Informationssignals zwischen einem ersten, zur kabellosen Kommunikation eingerichteten Kommunikationsmodul eines Grundgeräts eines Küchengeräts und einem zweiten, zur kabellosen Kommunikation eingerichteten Kommunikationsmodul eines Zubehörteils des Küchengeräts, gelöst, bei dem ein Signal zwischen dem ersten Kommunikationsmodul und dem zweiten Kommunikationsmodul mittels eines Verbindungselements gemäß einer der oben beschriebenen Ausführungsformen übertragen wird.

Auch das Verfahren bietet dieselben Vorteile, wie das Küchengerät und das Verbindungselement der vorherigen Absätze.

Die Merkmale des Küchengeräts, des Verbindungselements und des Verfahrens können beliebig miteinander kombiniert werden. Weitere Merkmale und Vorteile des Küchengeräts, des Verbindungselements und des Verfahrens ergeben sich aus der nachfolgenden Beschreibung erläutert, wobei auf die beigefügte Zeichnung Bezug genommen wird. In der Zeichnung zeigen
- Fig. 1: ein erstes Beispiel für ein Küchengerät mit einem Verbindungselement,
- Fig. 1a: eine Detailansicht des Küchengeräts aus der Fig. 1,
- Fig. 2: ein erstes Bespiel für ein Verbindungselement,
- Fig. 3: ein zweites Bespiel für ein Verbindungselement,
- Fig. 3a: ein Bauteil des Verbindungselements aus der Fig. 3 in einer ersten perspektivischen Ansicht und ohne Isolierungsmaterial,
- Fig. 3b: das Bauteil aus der Fig. 3a in einer zweiten perspektivischen Ansicht und ohne Isolierungsmaterial,
- Fig. 3c: das Bauteil aus der Fig. 3a mit Isolierungsmaterial,
- Fig. 3d: das Bauteil aus der Fig. 3b mit Isolierungsmaterial,
- Fig. 4: ein drittes Bespiel für ein Verbindungselement,
- Fig. 5: ein zweites Beispiel für ein Küchengerät mit einem

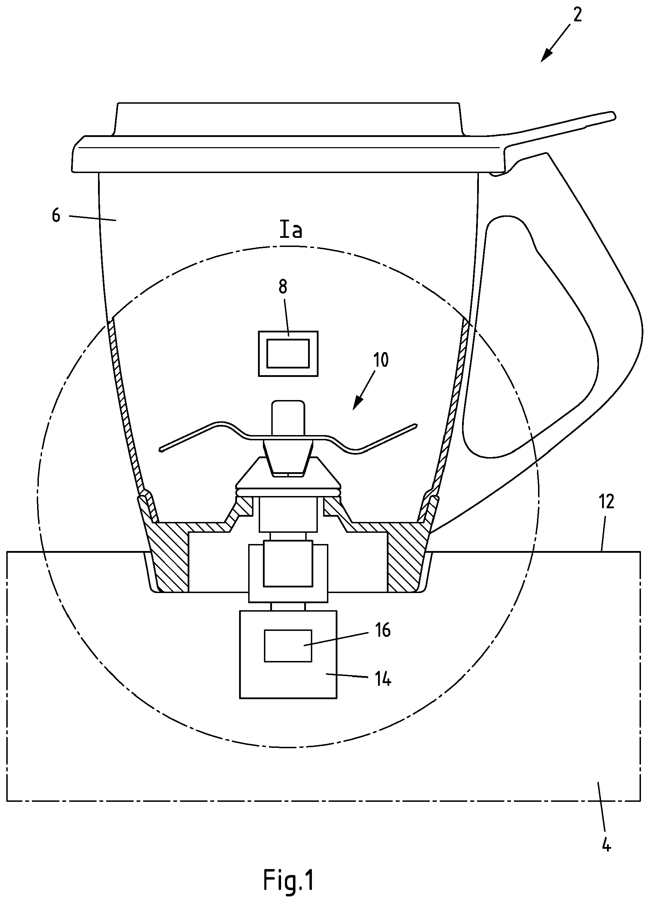

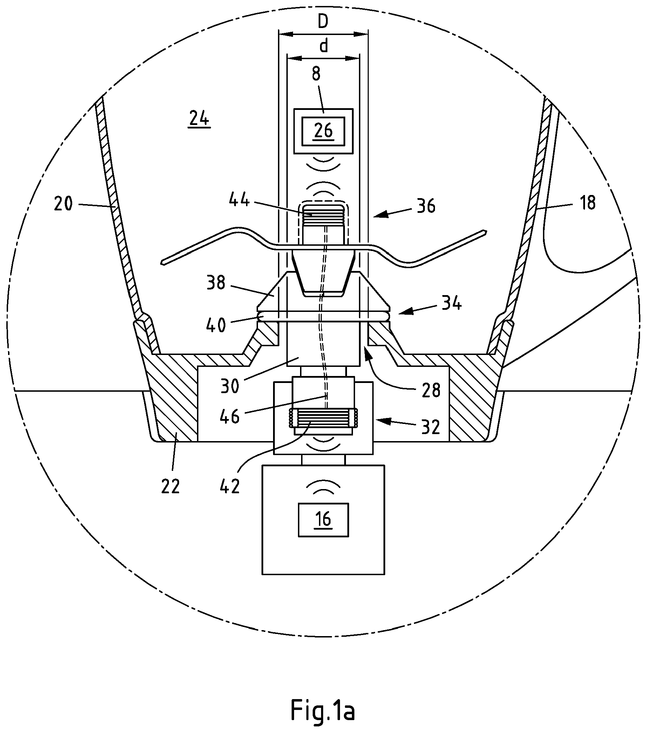

Verbindungselement, das durch die vorliegenden Ansprüche nicht abgedeckt ist. Fig. 1 zeigt Küchengerät 2 mit einem Grundgerät 4, mit einem Aufnahmegefäß 6, mit einem Zubehörteil 8 und mit einem Verbindungselement 10. Das Grundgerät 4 weist ein Gehäuse 12, einen Antrieb 14 und ein erstes, zur kabellosen Kommunikation eingerichtetes Kommunikationsmodul 16 in Form eines RFID-Transceivers auf. Der Ausschnitt Ia des Küchengeräts ist in Fig. 1a weiter in Details gezeigt.

Das Aufnahmegefäß 6 ist zur Aufnahme von Lebensmitteln bzw. Zutaten zur Durchführung eines Zubereitungsvorgangs ausgebildet. Insbesondere ist das Aufnahmegefäß 6 zur Aufnahme von Flüssigkeiten und heißen Zutaten ausgebildet und weist eine Wandung 18 aus Edelstahl auf. Die Wandung 18 ist mit seitlichen Wänden 20 und einem Boden 22 einstückig ausgebildet, wobei die Wandung 18 eine obere Öffnung zur Aufnahme von Lebensmitteln aufweist. Ferner ist am Boden 22 eine Heizung (nicht gezeigt) zur Erwärmung von aufgenommenen Lebensmitteln integriert.

Das Zubehörteil 8 ist zur Verwendung in dem Aufnahmeraum 24 des Aufnahmegefäßes 6 und zur Ergänzung der Funktion des Küchengerätes 2 bestimmt. Hier kann das Zubehörteil 8 zum Beispiel die Form einer Rühr-, Schneide-, Schäl- oder Wiege- oder Abdeckungseinheit annehmen. Das Zubehörteil 8 weist ein zweites, zur kabellosen Kommunikation eingerichtetes Kommunikationsmodul 26 auf, hier als RFID Transponder ausgebildet.

Aufgrund ihrer Zusammensetzung mit Edelstahl hindert die Wandung 18 des Aufnahmegefäßes 6 zumindest teilweise den Weg von elektromagnetischen Wellen zwischen beiden Seiten der Wandung 18. Um dieses Hindernis zu überwinden weist die Wandung 18 des in den Fig. 1 und Fig. 1a gezeigten Aufnahmegefäßes 6 eine durchdringende Öffnung 28 auf, in der das Verbindungselement 10 aufgenommen ist.

Das Verbindungselement 10 weist einen Grundkörper 30 mit einem ersten distalen Abschnitt 32, mit einem Übergangsabschnitt 34 und mit einem zweiten distalen Abschnitt 36 auf. Der erste distale Abschnitt 32 und der zweite distale Abschnitt 36 sind entgegen gerichtet angeordnet. Der Übergangsabschnitt 34 verbindet den ersten distalen Abschnitt 32 und den zweiten distalen Abschnitt 36. Ferner weist der Übergangsabschnitt 34 einen Außendurchmesser d auf, der an den Innendurchmesser D der durchdringenden Öffnung 28 der Wandung 18 des Aufnahmegefäßes 6 angepasst ist. Außerdem ist im Bereich, in dem der Übergangsabschnitt 34 und dem zweiten distalen Ende ineinander übergehen, eine Kappe 38 mit einem Dichtungselement 40 vorgesehen, die eine dichte Verbindung des Verbindungselement 10 mit der Wandung 18 bzw. dem Boden 22 des Aufnahmegefäßes 6 gewährleistet.

Das Verbindungselement 10 weist ein erstes Kommunikationselement 42 am ersten distalen Abschnitt 32 und ein zweites Kommunikationselement 44 am zweiten distalen Abschnitt 36 auf. Das erste Kommunikationselement 42 ist zur drahtlosen Kommunikation mit dem ersten Kommunikationsmodul 16 des Grundgeräts 4 eingerichtet. Daneben ist das zweite Kommunikationselement 44 zur drahtlosen Kommunikation mit dem zweiten Kommunikationsmodul 26 des Zubehörteils 8 eingerichtet. Das erste Kommunikationselement 42 und das zweite Kommunikationselement 44 sind über eine Kabelverbindung 46 verbunden. Das erste Kommunikationselement 42, das zweite Kommunikationselement 44 und die Kabelverbindung 46 bilden ein passives RFID Wiederholungsmodul, das dazu geeignet ist, ein Signal zwischen dem ersten Kommunikationsmodul 16 des Grundgeräts 4 und dem zweiten Kommunikationsmodul 26 des Zubehörteils 8 zu übertragen.

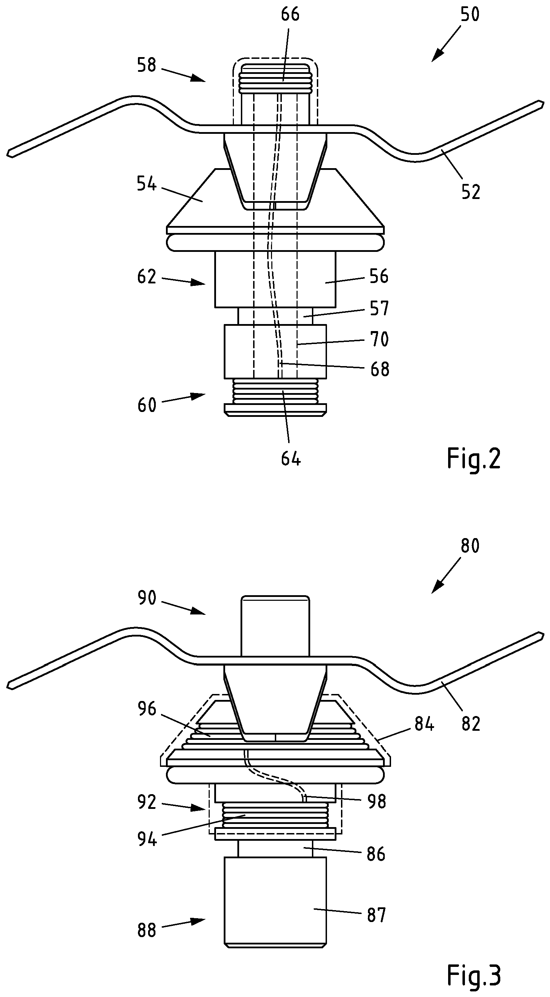

Fig. 2 zeigt ein erstes Bespiel für ein Verbindungselement 50, das mit einer Messereinheit 52, mit einer abdichtenden Kappe 54 und mit einem Grundkörper 56 in Form eines Übertragungselements 57 ausgebildet ist. Das Übertragungselement 57 ist wiederum als Welle ausgebildet. Das Verbindungselement 50 weist einen ersten distalen Abschnitt 58, einen zweiten distalen Abschnitt 60 und einen diesen Abschnitte 58, 60 verbindenden Übergangsabschnitt 62 auf. Außerdem weist das Verbindungselement 50 ein erstes Kommunikationselement 64 und ein zweites Kommunikationselement 66 auf, die jeweils am ersten distalen Abschnitt 58 und am zweiten distalen Abschnitt 60 angeordnet sind. Beide Kommunikationselemente 64, 66 sind zur Signalübertragung mit weiteren NFC-Elementen oder - Modulen mittels NFC-Technologie eingerichtet. Ferner sind das erste Kommunikationselement 64 und das zweite Kommunikationselement 66 über eine Kabelverbindung 68 verbunden, die in einer als Bohrung durch das Übertragungselement 57 ausgebildete Kabelführung 70 angeordnet ist.

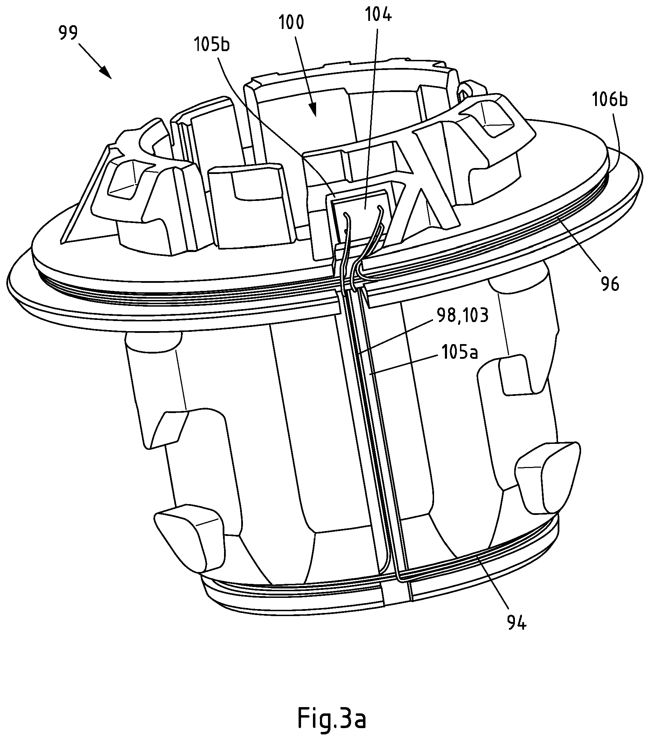

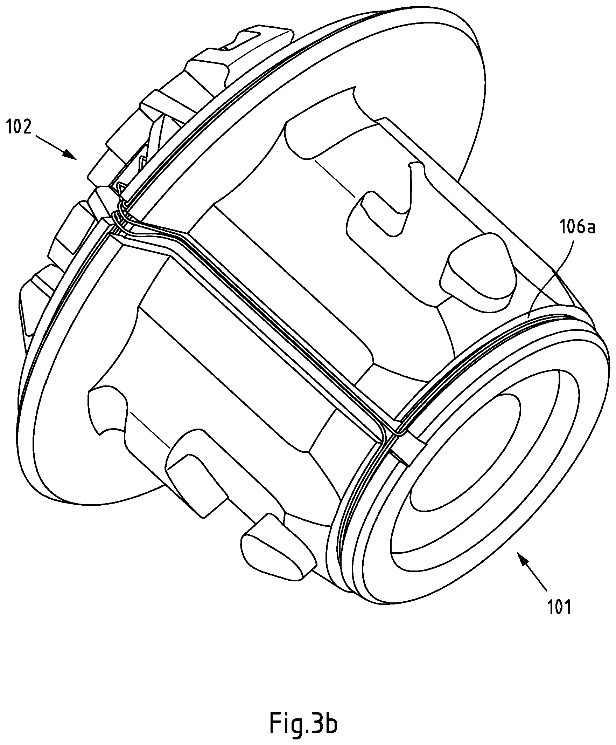

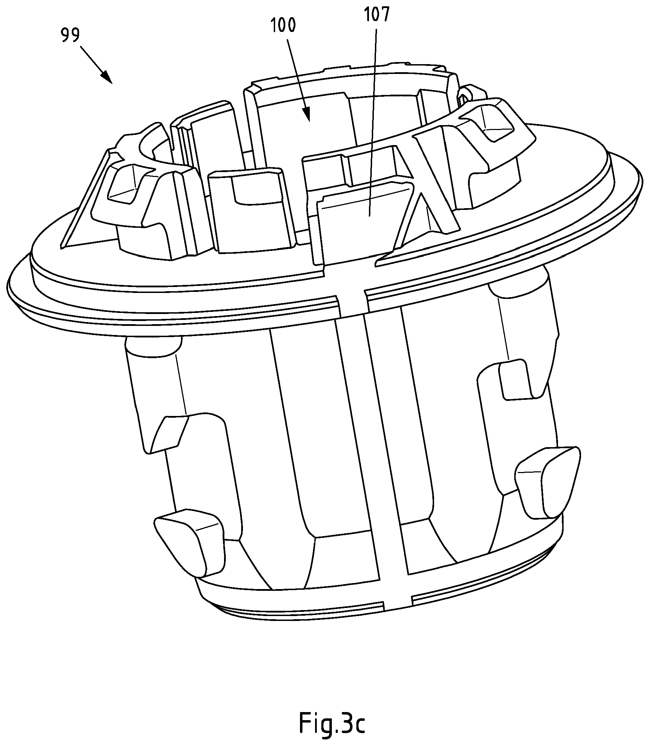

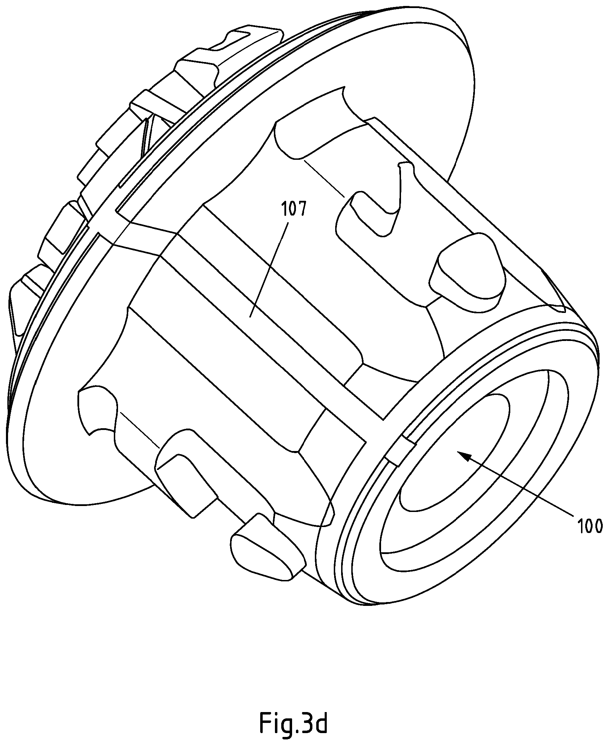

Fig. 3 zeigt ein zweites Bespiel für ein Verbindungselement 80, das auch mit einer Messereinheit 82, mit einer abdichtenden Kappe 84 und mit einem Grundkörper 86 in Form eines Übertragungselements 87 ausgebildet ist. Die abdichtende Kappe 84 soll zweckmäßig den bei einem Zubereitungsvorgang auftretenden mechanischen Beanspruchungen widerstehen und gleichzeitig für elektromagnetische Wellen zumindest teilweise durchlässig sein. Vorliegend ist die abdichtende Kappe 84 im Wesentlichen aus Kunststoff ausgebildet.

Das Verbindungselement 80 weist einen ersten distalen Abschnitt 88, einen zweiten distalen Abschnitt 90 und einen Übergangsabschnitt 92 auf. Auch hier sind ein erstes NFC-Kommunikationselement 94 und ein zweites NFC-Kommunikationselement 96 vorgesehen, die mittels einer Kabelverbindung 98 verbunden sind. Im Unterschied zum Verbindungselement 50 aus der Fig. 2 sind das erste Kommunikationselement 94 und das zweite Kommunikationselement 96 näher aneinander und am Übergangsabschnitt 92 angeordnet.

Insbesondere ist das zweite Kommunikationselement 96, vom zweiten distalen Abschnitt 90 betrachtet, hinter der Messereinheit 82 und der abdichtenden Kappe 84 angeordnet. Dies ermöglicht eine bessere Fertigbarkeit des Verbindungselements 80.

Fig. 3a, Fig. 3b, Fig. 3c und Fig. 3d zeigen ein Bauteil 99 des Verbindungselements 80 aus der Fig. 3. Das Bauteil 99 ist als Messerlageraufnahme ausgebildet und weist eine mittlere, durchdingende Öffnung 100 auf, die zur Aufnahme einer Welle ausgebildet ist. Bei den Fig. 3a und 3c ist das Bauteil 99 in einer ersten perspektivischen Ansicht und bei den Fig. 3b und 3d in einer zweiten perspektivischen Ansicht gezeigt. Ferner zeigen Fig. 3a und 3b das Bauteil 99 ohne Isolierungsmaterial, währen die Fig. 3c und 3d das Bauteil 99 mit Isolierungsmaterial zeigen.

An einem ersten Ende 101 des Bauteils 99 ist das erste NFC-Kommunikationselement 94 angeordnet. Das erste NFC-Kommunikationselement 94 ist über die Kabelverbindung 98 mit dem zweiten NFC-Kommunikationselement 96, das an einem zweiten Ende 102 des Bauteils 99 angeordnet ist, verbunden. Die Kabelverbindung 98 ist als Kabel 103 mit einem Kondensator-PCB 104 ausgebildet, wobei sowohl das Kabel 103 als auch der Kondensator-PCB 104 jeweils in einer Aussparung 105a, 105b in der Masse des Bauteils 99 angeordnet sind. Die Kabelverbindung 98 und die Aussparungen 105a, 105b zusammen erstrecken sich vom ersten Ende 101 bis zum zweiten Ende 102 des Bauteils 99. Das erste NFC-Kommunikationselement 94 und das zweite NFC-Kommunikationselement 96 sind jeweils in Aussparungen 106a, 106b in der Masse des Bauteils 99 eingelassen.

In den Aussparungen 105a, 105b, 106a und 106b wurde Isolierungsmaterial 107, hier Silikon, durch ein sogenanntes "over-molding"-Verfahren appliziert worden, so dass das erste NFC-Kommunikationselement 94, das zweite NFC-Kommunikationselement 96, die Kabelverbindung 98 und deren Anschlüsse gegenüber der Umgebung elektrisch isoliert und gegenüber mechanischen Beanspruchungen geschützt sind.

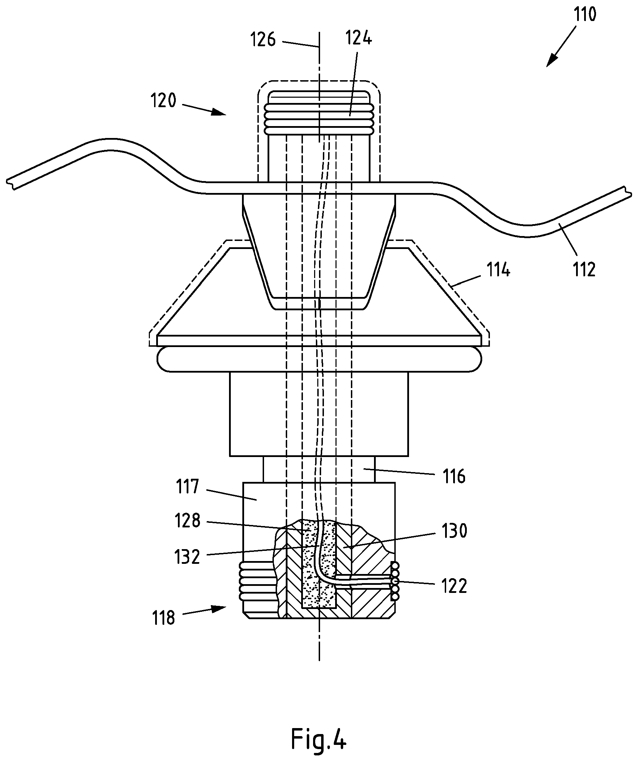

Fig. 4 zeigt ein drittes Bespiel für ein Verbindungselement 110, das eine Messereinheit 112, eine abdichtende Kappe 114 und einen Grundkörper 116 in Form eines Übertragungselements 117 aufweist. Das Übertragungselement 117 ist als Welle mit einem ersten distalen Abschnitt 118 und mit einem zweiten distalen Abschnitt 120 ausgebildet, wobei der erste distale Abschnitt 118 des Übertragungselements 117 gleichzeitig der erste distale Abschnitt des Verbindungelements 110 ist. Dies gilt auch für den zweiten distalen Abschnitt 120 des Übertragungselements 117 bzw. des Verbindungselements 110.

Ferner sind am ersten distalen Abschnitt 118 ein erstes Kommunikationselement 122 und am zweiten distalen Abschnitt 120 ein zweites Kommunikationselement 124 angeordnet. Das Übertragungselement weist einen entlang der Haupterstreckungsachse 126 des Übertragungselements 117 verlaufenden Kern 128 aus einem elektrisch isolierenden Material und eine um den Kern 128 umlaufend angeordnete Wandung 130 aus einem elektrisch leitenden Material auf. Außerdem verläuft eine Kabelverbindung 132 durch den Kern 128. Sowohl die Wandung 130 des Übertragungselements 117 als auch die Kabelverbindung 132 sind mit beiden Kommunikationselementen 122, 124 verbunden, so dass die Wandung 130 des Übertragungselements 117 und die Kabelverbindung 132 zusammen einen Koaxialleiter zwischen dem ersten und dem zweiten Kommunikationselement 122, 124 bilden.

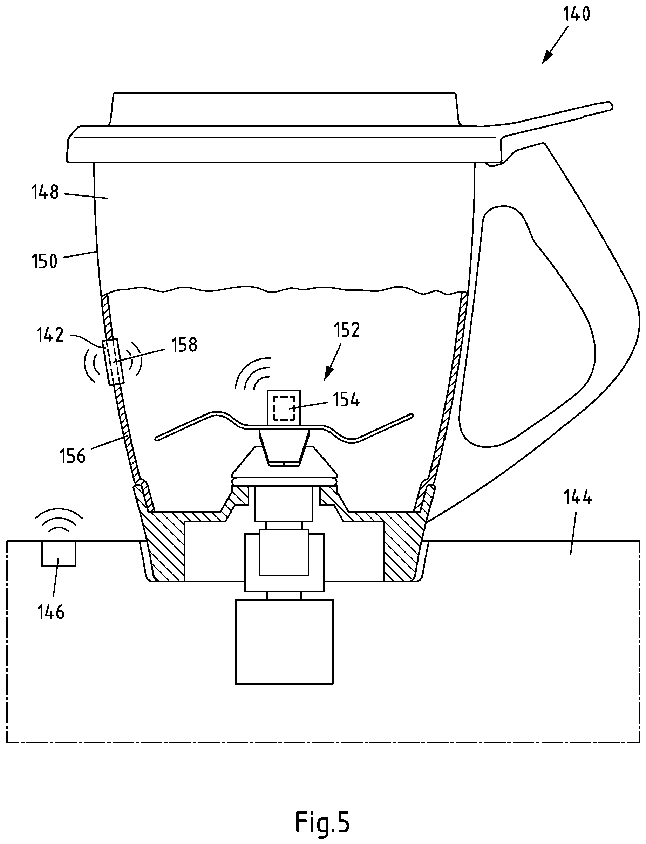

Fig. 5 zeigt ein zweites Beispiel für ein Küchengerät 140 mit einem Verbindungselement 142, das durch die vorliegenden Ansprüche nicht abgedeckt ist. Das Küchengerät 140 weist ein Grundgerät 144, das ein erstes, zur kabellosen Kommunikation eingerichtetes Kommunikationsmodul 146 aufweist, ein Aufnahmegefäß 148 mit einer Wandung 150 und ein Zubehörteil 152, wobei das Zubehörteil 152 ein zweites, zur kabellosen Kommunikation eingerichtetes Kommunikationsmodul 154 aufweist, auf. In einer Seitenwand 156 der Wandung 150 des Aufnahmegefäßes 148 ist eine durchdringende Öffnung 158 vorgesehen.

Das Verbindungselement 142 ist als Wiederholungsmodul bzw. zur Signalübertragung zwischen dem ersten und dem zweiten Kommunikationsmodul 146, 154 eingerichtet und in der durchdringenden Öffnung 158 der Wandung 150 angeordnet.

## Patentansprüche

1. Küchengerät (2, 140)
- mit einem Grundgerät (4,144), wobei das Grundgerät (4,144) ein erstes, zur kabellosen Kommunikation eingerichtetes Kommunikationsmodul (16, 146) aufweist,
- mit einem Aufnahmegefäß (6, 148), wobei das Aufnahmegefäß (6, 148) eine Wandung (18, 150) mit einer durchdringenden Öffnung (28, 158) aufweist und
- mit einem Zubehörteil (8, 152), wobei das Zubehörteil (8, 152) ein zweites, zur kabellosen Kommunikation eingerichtetes Kommunikationsmodul (26, 154) aufweist,
wobei
- ein Verbindungselement (10, 50, 80, 110, 142) vorgesehen ist,
- wobei das Verbindungselement (10, 50, 80, 110, 142) zur Anordnung in der durchdringenden Öffnung (28, 158) der Wandung (18, 150) des Aufnahmegefäßes (6, 148) ausgebildet ist, und
- wobei das Verbindungselement (10, 50, 80, 110, 142) zum Übermitteln von Signalen zwischen dem ersten Kommunikationsmodul (16, 146) und dem zweiten Kommunikationsmodul (26, 154) eingerichtet ist, **dadurch gekennzeichnet,**
- **dass** das Grundgerät (4,144) einen Antrieb (14) aufweist, und
- **dass** das Verbindungselement (10, 50, 80, 110, 142) zur Übertragung einer Antriebskraft vom Antrieb (14) des Grundgeräts (4,144) auf das Zubehörteil (8, 152) ausgebildet ist.

2. Küchengerät (2, 140) nach dem Anspruch 1,
**dadurch gekennzeichnet,**
- **dass** die Wandung (18, 150) des Aufnahmegefäßes (6, 148) zumindest teilweise aus einem Material ausgebildet ist, das für elektromagnetische Wellen zumindest teilweise undurchlässig ist.

3. Küchengerät (2, 140) nach Anspruch 1 oder 2,
**dadurch gekennzeichnet,**
- **dass** das Verbindungselement (10, 50, 80, 110, 142) ein erstes Kommunikationselement (42, 64, 94, 122) und ein zweites Kommunikationselement (44, 66, 96, 124) aufweist,
- wobei das erste Kommunikationselement (42, 64, 94, 122) zur drahtlosen Kommunikation mit dem ersten Kommunikationsmodul (16, 146) des Grundgeräts (4,144) und das zweite Kommunikationselement (44, 66, 96, 124) zur drahtlosen Kommunikation mit dem zweiten Kommunikationsmodul (26, 154) des Zubehörteils (8, 152) eingerichtet sind, und
- wobei das erste Kommunikationselement (42, 64, 94, 122) und das zweite Kommunikationselement (44, 66, 96, 124) über eine Kabelverbindung (46, 68, 98, 132) verbunden sind.

4. Küchengerät (2, 140) nach Anspruch 3,
**dadurch gekennzeichnet,**
- **dass** das erste Kommunikationsmodul (16, 146) des Grundgeräts (4,144) ein Nahfeldkommunikationslesemodul insbesondere ein RFID-Lesemodul oder ein NFC-Lesemodul ist,
- **dass** das zweite Kommunikationsmodul (26, 154) des Zubehörteils (8, 152) ein Nahfeldkommunikationstransponder insbesondere ein RFID-Transponder oder ein NFC-Transponder ist, und
- **dass** das erste Kommunikationselement (42, 64, 94, 122), das zweite Kommunikationselement (44, 66, 96, 124) und deren Verbindung ein passives Nahfeldwiederholungsmodul, insbesondere ein RFID-Wiederholungsmodul oder ein NFC-Wiederholungsmodul bilden.

5. Küchengerät (2, 140) nach einem der Ansprüche 1 bis 4,
**dadurch gekennzeichnet,**
- **dass** das Verbindungselement (10, 50, 80, 110, 142) einen Grundkörper (30, 56, 86, 116) mit einem ersten distalen Abschnitt (32, 58, 88, 118), mit einem Übergangsabschnitt (34, 62, 92) und mit einem zweiten distalen Abschnitt (36, 60, 90, 120) aufweist,
- wobei der erste distale Abschnitt (32, 58, 88, 118) und der zweite distale Abschnitt (36, 60, 90, 120) entgegen gerichtet angeordnet sind und der Übergangsabschnitt (34, 62, 92) den ersten distalen Abschnitt (32, 58, 88, 118) und den zweiten distalen Abschnitt (36, 60, 90, 120) verbindet,
- wobei der Übergangsabschnitt (34, 62, 92) zur Anordnung in der durchdringenden Öffnung (28, 158) in der Wandung (18, 150) des Aufnahmegefäßes (6, 148) ausgebildet ist, und
- **dass** das erste Kommunikationselement (42, 64, 94, 122) am ersten distalen Abschnitt (32, 58, 88, 118) und das zweite Kommunikationselement (44, 66, 96, 124) am zweiten distalen Abschnitt (36, 60, 90, 120) angeordnet sind.

6. Küchengerät (2, 140) nach Anspruch 5,
**dadurch gekennzeichnet,**
- **dass** der Übergangsabschnitt (34, 62, 92) eine Kabelführung (70, 105a, 105b) aufweist, und
- **dass** die Kabelführung (70, 105a, 105b) die Kabelverbindung (46, 68, 98, 132) zwischen dem ersten Kommunikationselement (42, 64, 94, 122) und dem zweiten Kommunikationselement (44, 66, 96, 124) führt.

7. Küchengerät (2, 140) nach einem der Ansprüche 3 bis 6,
**dadurch gekennzeichnet,**
- **dass** die Kabelverbindung (46, 68, 98, 132) einen Koaxialleiter aufweist,
- **dass** das Verbindungselement (10, 50, 80, 110, 142) bzw. der Grundkörper (30, 56, 86, 116) des Verbindungselements (10, 50, 80, 110, 142) zumindest teilweise ein elektrisch leitendes Material aufweist, und
- **dass** der Koaxialleiter zumindest teilweise durch das elektrisch leitende Material des Grundkörpers (30, 56, 86, 116) des Verbindungselements (10, 50, 80, 110, 142) ausgebildet ist.

8. Verbindungselement (10, 50, 80, 110, 142) für ein Küchengerät (2, 140)
- mit einem Grundkörper (30, 56, 86, 116),
- wobei der Grundkörper (30, 56, 86, 116) zumindest teilweise zur Anordnung in einer durchdringenden Öffnung (28, 158) in der Wandung (18, 150) eines Aufnahmegefäßes (6, 148) des Küchengeräts (2, 140) ausgebildet ist,
- wobei ein erstes, zur kabellosen Kommunikation eingerichtetes Kommunikationselement (42, 64, 94, 122) und ein zweites, zur kabellosen Kommunikation eingerichtetes Kommunikationselement (44, 66, 96, 124) vorgesehen sind, und
- wobei das erste Kommunikationselement (42, 64, 94, 122) und das zweite Kommunikationselement (44, 66, 96, 124) über eine Kabelverbindung (46, 68, 98, 132) verbunden sind,
**dadurch gekennzeichnet,**
- **dass** der Grundkörper (30, 56, 86, 116) ein Übertragungselement (57, 87, 117) zur Übertragung einer Antriebskraft vom ersten distalen Abschnitt (32, 58, 88, 101, 118) zum zweiten distalen Abschnitt (36, 60, 90, 102, 120) aufweist.

9. Verbindungselement (10, 50, 80, 110, 142) nach Anspruch 8,
**dadurch gekennzeichnet,**
- **dass** das erste Kommunikationselement (42, 64, 94, 122), das zweite Kommunikationselement (44, 66, 96, 124) und deren Verbindung ein passives Nahfeldwiederholungsmodul insbesondere ein RFID oder NFC Wiederholungsmodul bilden.

10. Verbindungselement (10, 50, 80, 110, 142) nach Anspruch 8 oder 9,
**dadurch gekennzeichnet,**
- **dass** das der Grundkörper (30, 56, 86, 116) einen ersten distalen Abschnitt (32, 58, 88, 118), einen Übergangsabschnitt (34, 62, 92) und einen zweiten distalen Abschnitt (36, 60, 90, 120) aufweist,
- wobei der erste distale Abschnitt (32, 58, 88, 118) und der zweite distale Abschnitt (36, 60, 90, 120) entgegen gerichtet angeordnet sind und der Übergangsabschnitt (34, 62, 92) den ersten distalen Abschnitt (32, 58, 88, 118) und den zweiten distalen Abschnitt (36, 60, 90, 120) verbindet, und
- wobei der Übergangsabschnitt (34, 62, 92) zur Anordnung in der durchdringenden Öffnung (28, 158) in der Wandung (18, 150) eines Aufnahmegefäßes (6, 148) des Küchengeräts (2, 140) ausgebildet ist,
- **dass** das erste Kommunikationselement (42, 64, 94, 122) am ersten distalen Abschnitt (32, 58, 88, 118) angeordnet ist, und
- **dass** das zweite Kommunikationselement (44, 66, 96, 124) am zweiten distalen Abschnitt (36, 60, 90, 120) angeordnet ist.

11. Verbindungselement (10, 50, 80, 110, 142) nach Anspruch 10,
**dadurch gekennzeichnet,**
- **dass** der Übergangsabschnitt (34, 62, 92) eine Kabelführung (70, 105a, 105b) aufweist, und
- **dass** die Kabelführung (70, 105a, 105b) die Kabelverbindung (46, 68, 98, 132) zwischen dem ersten Kommunikationselement (42, 64, 94, 122) und dem zweiten Kommunikationselement (44, 66, 96, 124) führt.

12. Verbindungselement (10, 50, 80, 110, 142) nach einem der Ansprüche 8 bis 11, **dadurch gekennzeichnet,**
- **dass** die Kabelverbindung (46, 68, 98, 132) einen Koaxialleiter aufweist,
- **dass** der Grundkörper (30, 56, 86, 116) zumindest teilweise ein elektrisch leitendes Material aufweist, und
- **dass** der Koaxialleiter zumindest teilweise durch das elektrisch leitende Material des Grundkörpers (30, 56, 86, 116) des Verbindungselements (10, 50, 80, 110, 142) ausgebildet ist.

13. Verbindungselement (10, 50, 80, 110, 142) einem der Ansprüche 8 bis 12,
**dadurch gekennzeichnet,**
- **dass** das Verbindungselement (10, 50, 80, 110, 142) eine Messereinheit (52, 82, 112) aufweist, und
- **dass** das Übertragungselement (57, 87, 117) zur Übertragung einer Antriebskraft vom Antrieb (14) des Grundgeräts (4,144) auf die Messereinheit (52, 82, 112) ausgebildet ist.

14. Verfahren zur Übertragung eines Informationssignals zwischen einem ersten, zur kabellosen Kommunikation eingerichteten Kommunikationsmodul (16, 146) eines Grundgeräts (4,144) eines Küchengeräts (2, 140) und einem zweiten, zur kabellosen Kommunikation eingerichteten Kommunikationsmodul (26, 154) eines Zubehörteils (8, 152) des Küchengeräts (2, 140),
bei dem ein Signal zwischen dem ersten Kommunikationsmodul (16, 146) und dem zweiten Kommunikationsmodul (26, 154) mittels eines Verbindungselements (10, 50, 80, 110, 142) nach einem der Ansprüche 8 bis 13 übertragen wird.

## Claims

1. Kitchen appliance (2, 140)
- with a base unit (4, 144), wherein the base unit (4, 144) has a first communication module (16, 146) configured for wireless communication,
- with a receiving vessel (6, 148), wherein the receiving vessel (6, 148) has a wall (18, 150) with a penetrating opening (28, 158) and
- with an accessory part (8, 152), wherein the accessory part (8, 152) has a second communication module (26, 154) configured for wireless communication,
- wherein a connecting element (10, 50, 80, 110, 142) is provided,
- wherein the connecting element (10, 50, 80, 110, 142) is adapted for arrangement in the penetrating opening (28, 158) of the wall (18, 150) of the receiving vessel (6, 148), and
- wherein the connecting element (10, 50, 80, 110, 142) is configured for transmitting signals between the first communication module (16, 146) and the second communication module (26, 154),
**characterised in**
- **that** the base unit (4, 144) comprises a drive (14), and
- **that** the connecting element (10, 50, 80, 110, 142) is adapted to transmit a drive force from the drive (14) of the base unit (4, 144) to the accessory part (8, 152).

2. Kitchen appliance (2, 140) according to claim 1,
**characterised**
**in that** the wall (18, 150) of the receiving vessel (6, 148) is formed at least partially from a material which is at least partially impermeable to electromagnetic waves.

3. Kitchen appliance (2, 140) according to claim 1 or 2,
**characterised**
- **in that** the connecting element (10, 50, 80, 110, 142) comprises a first communication element (42, 64, 94, 122) and a second communication element (44, 66, 96, 124),
- wherein the first communication element (42, 64, 94, 122) is configured for wireless communication with the first communication module (16, 146) of the base unit (4, 144) and the second communication element (44, 66, 96, 124) is configured for wireless communication with the second communication module (26, 154) of the accessory part (8, 152), and
- wherein the first communication element (42, 64, 94, 122) and the second communication element (44, 66, 96, 124) are connected via a cable connection (46, 68, 98, 132).

4. Kitchen appliance (2, 140) according to claim 3,
**characterised**
- **in that** the first communication module (16, 146) of the base unit (4, 144) is a near-field communication reader module, in particular an RFID reader module or an NFC reader module,
- **in that** the second communication module (26, 154) of the accessory part (8, 152) is a near-field communication transponder, in particular an RFID transponder or an NFC transponder, and
- that the first communication element (42, 64, 94, 122), the second communication element (44, 66, 96, 124) and their connection form a passive near-field repeating module, in particular an RFID repeating module or an NFC repeating module.

5. Kitchen appliance (2, 140) according to any one of claims 1 to 4,
**characterised**
- **in that** the connecting element (10, 50, 80, 110, 142) has a base body (30, 56, 86, 116) with a first distal portion (32, 58, 88, 118), with a transition portion (34, 62, 92) and with a second distal portion (36, 60, 90, 120),
- wherein the first distal portion (32, 58, 88, 118) and the second distal portion (36, 60, 90, 120) are arranged in opposite directions and the transition portion (34, 62, 92) connects the first distal portion (32, 58, 88, 118) and the second distal portion (36, 60, 90, 120),
- wherein the transition portion (34, 62, 92) is adapted to be disposed in the penetrating opening (28, 158) in the wall (18, 150) of the receiving vessel (6, 148), and
- **in that** the first communication element (42, 64, 94, 122) is arranged at the first distal portion (32, 58, 88, 118) and the second communication element (44, 66, 96, 124) is arranged at the second distal portion (36, 60, 90, 120).

6. Kitchen appliance (2, 140) according to claim 5,
**characterised**
- **in that** the transition portion (34, 62, 92) has a cable guide (70, 105a, 105b), and
- **in that** the cable guide (70, 105a, 105b) guides the cable connection (46, 68, 98, 132) between the first communication element (42, 64, 94, 122) and the second communication element (44, 66, 96, 124).

7. Kitchen appliance (2, 140) according to any one of claims 3 to 6,
**characterised**
- **in that** the cable connection (46, 68, 98, 132) has a coaxial conductor,
- **in that** the connecting element (10, 50, 80, 110, 142) or the base body (30, 56, 86, 116) of the connecting element (10, 50, 80, 110, 142) has at least partially an electrically conductive material, and
- **in that** the coaxial conductor is formed at least partially by the electrically conductive material of the base body (30, 56, 86, 116) of the connecting element (10, 50, 80, 110, 142).

8. Connecting element (10, 50, 80, 110, 142) for a kitchen appliance (2, 140)
- with a base body (30, 56, 86, 116),
- wherein the base body (30, 56, 86, 116) is formed at least partially for arrangement in a penetrating opening (28, 158) in the wall (18, 150) of a receiving vessel (6, 148) of the kitchen appliance (2, 140),
- wherein a first communication element (42, 64, 94, 122) adapted for wireless communication and a second communication element (44, 66, 96, 124) adapted for wireless communication are provided, and
- wherein the first communication element (42, 64, 94, 122) and the second communication element (44, 66, 96, 124) are connected via a cable connection (46, 68, 98, 132),
**characterised in**
- **that** the base body (30, 56, 86, 116) has a transmission element (57, 87, 117) for transmitting a drive force from the first distal portion (32, 58, 88, 101, 118) to the second distal portion (36, 60, 90, 102, 120).

9. Connecting element (10, 50, 80, 110, 142) according to claim 8,
**characterised**
**in that** the first communication element (42, 64, 94, 122), the second communication element (44, 66, 96, 124) and their connection form a passive near-field repeating module, in particular an RFID or NFC repeating module.

10. Connecting element (10, 50, 80, 110, 142) according to claim 8 or 9,
**characterised**
- **in that** the base body (30, 56, 86, 116) has a first distal portion (32, 58, 88, 118), a transition portion (34, 62, 92) and a second distal portion (36, 60, 90, 120),
- wherein the first distal portion (32, 58, 88, 118) and the second distal portion (36, 60, 90, 120) are arranged in opposite directions and the transition portion (34, 62, 92) connects the first distal portion (32, 58, 88, 118) and the second distal portion (36, 60, 90, 120), and
- wherein the transition portion (34, 62, 92) is adapted for arrangement in the penetrating opening (28, 158) in the wall (18, 150) of a receiving vessel (6, 148) of the kitchen appliance (2, 140),
- **in that** the first communication element (42, 64, 94, 122) is arranged at the first distal portion (32, 58, 88, 118), and
- **in that** the second communication element (44, 66, 96, 124) is arranged at the second distal portion (36, 60, 90, 120).

11. Connecting element (10, 50, 80, 110, 142) according to claim 10,
**characterised**
- **in that** the transition portion (34, 62, 92) has a cable guide (70, 105a, 105b), and
- **in that** the cable guide (70, 105a, 105b) guides the cable connection (46, 68, 98, 132) between the first communication element (42, 64, 94, 122) and the second communication element (44, 66, 96, 124).

12. Connecting element (10, 50, 80, 110, 142) according to any one of claims 8 to 11, **characterised**
- **in that** the cable connection (46, 68, 98, 132) has a coaxial conductor,
- **in that** the base body (30, 56, 86, 116) at least partially comprises an electrically conductive material, and
- **in that** the coaxial conductor is formed at least partially by the electrically conductive material of the base body (30, 56, 86, 116) of the connecting element (10, 50, 80, 110, 142).

13. Connecting element (10, 50, 80, 110, 142) according to any one of claims 8 to 12, **characterised**
- **in that** the connecting element (10, 50, 80, 110, 142) has a blade unit (52, 82, 112), and
- **in that** the transmission element (57, 87, 117) is adapted to transmit a drive force from the drive (14) of the base unit (4, 144) to the blade unit (52, 82, 112).

14. Method for transmitting an information signal between a first communication module (16, 146) of a base unit (4, 144) of a kitchen appliance (2, 140), which is configured for wireless communication, and a second communication module (26, 154) of an accessory part (8, 152) of the kitchen appliance (2, 140), which is configured for wireless communication,
wherein a signal is transmitted between the first communication module (16, 146) and the second communication module (26, 154) by means of a connecting element (10, 50, 80, 110, 142) according to any one of claims 8 to 13.

## Revendications

1. Appareil de cuisine (2, 140)
- avec une unité de base (4, 144), où l'unité de base (4, 144) a un premier module de communication (16, 146) configuré pour une communication sans fil,
- avec un récipient (6, 148), où le récipient (6, 148) a une paroi (18, 150) avec une ouverture traversante (28, 158) et
- avec un accessoire (8, 152), où l'accessoire (8, 152) a un deuxième module de communication (26, 154) configuré pour une communication sans fil,
- où un élément de connexion (10, 50, 80, 110, 142) est prévu,
- où l'élément de connexion (10, 50, 80, 110, 142) est configuré pour être disposé dans l'ouverture traversante (28, 158) de la paroi (18, 150) du récipient (6, 148), et
- où l'élément de connexion (10, 50, 80, 110, 142) est configuré pour transmettre des signaux entre le premier module de communication (16, 146) et le deuxième module de communication (26, 154),
**caractérisé en ce,**
- **que** l'unité de base (4, 144) a un entraînement (14), et
- **que** l'élément de connexion (10, 50, 80, 110, 142) est configuré pour transmettre une force d'entraînement de l'entraînement (14) de l'unité de base (4, 144) à l'accessoire (8, 152).

2. Appareil de cuisine (2, 140) selon la revendication 1,
**caractérisé en ce que**,
- que la paroi (18, 150) du récipient (6, 148) est au moins partiellement formée d'un matériau qui est au moins partiellement imperméable aux ondes électromagnétiques.

3. Appareil de cuisine (2, 140) selon la revendication 1 ou 2,
**caractérisé en ce que**,
- que l'élément de connexion (10, 50, 80, 110, 142) a un premier élément de communication (42, 64, 94, 122) et un deuxième élément de communication (44, 66, 96, 124),
- où le premier élément de communication (42, 64, 94, 122) est configuré pour une communication sans fil avec le premier module de communication (16, 146) de l'unité de base (4, 144) et le deuxième élément de communication (44, 66, 96, 124) est configuré pour une communication sans fil avec le deuxième module de communication (26, 154) de l'accessoire (8, 152), et
- où le premier élément de communication (42, 64, 94, 122) et le deuxième élément de communication (44, 66, 96, 124) sont reliés par une connexion par câble (46, 68, 98, 132).

4. Appareil de cuisine (2, 140) selon la revendication 3,
**caractérisé en ce,**
- **que** le premier module de communication (16, 146) de l'unité de base (4, 144) est un module lecteur de communication en champ proche, en particulier un module lecteur RFID ou un module lecteur NFC,
- **que** le deuxième module de communication (26, 154) de l'accessoire (8, 152) est un transpondeur de communication en champ proche, en particulier un transpondeur RFID ou un transpondeur NFC, et
- **que** le premier élément de communication (42, 64, 94, 122), le deuxième élément de communication (44, 66, 96, 124) et leur connexion forment un module répéteur en champ proche passif, en particulier un module répéteur RFID ou un module répéteur NFC.

5. Appareil de cuisine (2, 140) selon l'une des revendications 1 à 4,
**caractérisé en ce,**
- **que** l'élément de connexion (10, 50, 80, 110, 142) a un corps principal (30, 56, 86, 116) avec une première section distale (32, 58, 88, 118), avec une section de transition (34, 62, 92) et avec une deuxième section distale (36, 60, 90, 120),
- où la première section distale (32, 58, 88, 118) et la deuxième section distale (36, 60, 90, 120) sont disposées en directions opposées l'une de l'autre et la section de transition (34, 62, 92) relie la première section distale (32, 58, 88, 118) et la deuxième section distale (36, 60, 90, 120),
- où la section de transition (34, 62, 92) est configuré pour être disposée dans l'ouverture traversante (28, 158) dans la paroi (18, 150) du récipient (6, 148), et
- **que** le premier élément de communication (42, 64, 94, 122) est disposé à la première section distale (32, 58, 88, 118) et le deuxième élément de communication (44, 66, 96, 124) est disposé à la deuxième section distale (36, 60, 90, 120).

6. Appareil de cuisine (2, 140) selon la revendication 5,
**caractérisé en ce,**
- **que** la section de transition (34, 62, 92) a un guide de câble (70, 105a, 105b), et
- **que** le guide de câble (70, 105a, 105b) guide la connexion par câble (46, 68, 98, 132) entre le premier élément de communication (42, 64, 94, 122) et le deuxième élément de communication (44, 66, 96, 124).

7. Appareil de cuisine (2, 140) selon l'une des revendications 3 à 6,
**caractérisé en ce,**
- **que** la connexion par câble (46, 68, 98, 132) a un conducteur coaxial,
- **que** l'élément de connexion (10, 50, 80, 110, 142) ou respectivement le corps principal (30, 56, 86, 116) de l'élément de connexion (10, 50, 80, 110, 142) a au moins partiellement un matériau électriquement conducteur, et
- **que** le conducteur coaxial est au moins partiellement formé par le matériau électriquement conducteur du corps principal (30, 56, 86, 116) de l'élément de connexion (10, 50, 80, 110, 142).

8. Élément de connexion (10, 50, 80, 110, 142) pour un appareil de cuisine (2, 140)
- avec un corps principal (30, 56, 86, 116),
- où le corps principal (30, 56, 86, 116) est au moins partiellement formé pour être disposé dans une ouverture traversante (28, 158) dans la paroi (18, 150) d'un récipient (6, 148) de l'appareil de cuisine (2, 140),
- où un premier élément de communication (42, 64, 94, 122) configuré pour une communication sans fil et un deuxième élément de communication (44, 66, 96, 124) configuré pour une communication sans fil sont prévus, et
- où le premier élément de communication (42, 64, 94, 122) et le deuxième élément de communication (44, 66, 96, 124) sont reliés par une connexion par câble (46, 68, 98, 132),
**caractérisé en ce,**
- **que** le corps principal (30, 56, 86, 116) a un élément de transmission (57, 87, 117) pour transmettre une force d'entraînement de la première section distale (32, 58, 88, 101, 118) à la deuxième section distale (36, 60, 90, 102, 120).

9. Élément de connexion (10, 50, 80, 110, 142) selon la revendication 8, **caractérisé en ce,**
- **que** le premier élément de communication (42, 64, 94, 122), le deuxième élément de communication (44, 66, 96, 124) et leur connexion forment un module répéteur en champ proche passif, en particulier un module répéteur RFID ou NFC.

10. Élément de connexion (10, 50, 80, 110, 142) selon la revendication 8 ou 9, **caractérisé en ce,**
- **que** le corps principal (30, 56, 86, 116) a une première section distale (32, 58, 88, 118), une section de transition (34, 62, 92) et une deuxième section distale (36, 60, 90, 120),
- où la première section distale (32, 58, 88, 118) et la deuxième section distale (36, 60, 90, 120) sont disposées en directions opposées l'une à l'autre et la section de transition (34, 62, 92) relie la première section distale (32, 58, 88, 118) et la deuxième section distale (36, 60, 90, 120), et
- où la section de transition (34, 62, 92) est formée pour être disposée dans l'ouverture traversante (28, 158) dans la paroi (18, 150) d'un récipient (6, 148) de l'appareil de cuisine (2, 140),
- **que** le premier élément de communication (42, 64, 94, 122) est disposé à la première section distale (32, 58, 88, 118), et
- **que** le deuxième élément de communication (44, 66, 96, 124) est disposé à la deuxième section distale (36, 60, 90, 120).

11. Élément de connexion (10, 50, 80, 110, 142) selon la revendication 10,
**caractérisé en ce,**
- **que** la section de transition (34, 62, 92) a un guide de câble (70, 105a, 105b), et
- **que** le guide de câble (70, 105a, 105b) guide la connexion par câble (46, 68, 98, 132) entre le premier élément de communication (42, 64, 94, 122) et le deuxième élément de communication (44, 66, 96, 124).

12. Élément de connexion (10, 50, 80, 110, 142) selon l'une des revendications 8 à 11,
**caractérisé en ce,**
- **que** la connexion par câble (46, 68, 98, 132) a un conducteur coaxial,
- **que** le corps principal (30, 56, 86, 116) a au moins partiellement un matériau électriquement conducteur, et
- **que** le conducteur coaxial est au moins partiellement formé par le matériau électriquement conducteur du corps principal (30, 56, 86, 116) de l'élément de connexion (10, 50, 80, 110, 142).

13. Élément de connexion (10, 50, 80, 110, 142) selon l'une des revendications 8 à 12,
**caractérisé en ce,**
- **que** l'élément de connexion (10, 50, 80, 110, 142) a une unité de coupe (52, 82, 112), et
- **que** l'élément de transmission (57, 87, 117) est formé pour transmettre une force d'entraînement de l'entraînement (14) de l'unité de base (4, 144) à l'unité de coupe (52, 82, 112).

14. Méthode de transmission d'un signal d'information entre un premier module de communication (16, 146), configuré pour une communication sans fil, d'une unité de base (4, 144) d'un appareil de cuisine (2, 140) et un deuxième module de communication (26, 154), configuré pour une communication sans fil, d'un accessoire (8, 152) de l'appareil de cuisine (2, 140),
où un signal est transmis entre le premier module de communication (16, 146) et le deuxième module de communication (26, 154) au moyen d'un élément de connexion (10, 50, 80, 110, 142) selon l'une des revendications 8 à 13.
